# EUROPÄISCHE PATENTSCHRIFT

(11) **EP 2 266 384 B1**
(45) Veröffentlichungstag und Bekanntmachung des Hinweises auf die Patenterteilung: **25.01.2012**
(21) Anmeldenummer: 10167577.5
(22) Anmeldetag: 28.06.2010
(51) Int. Cl.: A01D 44/00

(54) **Jätvorrichtung für Wasserpflanzen sowie Jätboot mit einer solchen Vorrichtung**
Weeding device for water plants and weeding boat with such a device
Dispositif de sarclage pour plantes aquatiques et bateau de sarclage doté d'un tel dispositif

(30) Priorität: 27.06.2009 DE 102009027260
(43) Veröffentlichungstag der Anmeldung: 29.12.2010
(73) Patentinhaber: Reimers, Rainer, 45239 Essen (DE)
(72) Erfinder: Reimers, Rainer, 45239 Essen (DE)
(74) Vertreter: CBDL Patentanwälte

(56) Entgegenhaltungen:
- DE-A1- 19 947 736
- GB-A- 2 237 490
- US-A- 1 795 003
- US-A- 5 481 856
- US-A1- 2009 126 329

## Beschreibung

### TECHNISCHES GEBIET DER ERFINDUNG

Die Erfindung betrifft eine Jätvorrichtung für Wasserpflanzen mit zwei im Betrieb gegenläufig rotierenden Walzen zum Einklemmen und Ausreißen zu jätenden Gutes. Die Erfindung betrifft ferner ein mit einer solchen Vorrichtung ausgestattetes Jätboot.

### HINTERGRUND DER ERFINDUNG

Sowohl bei Land- als auch bei Wasserpflanzen ist in den letzten Jahren eine starke Zunahme der Ausbreitung von ungewünschten, teilweise sogar gesundheitsgefährdenden Pflanzen zu beobachten. Es handelt sich bei diesen gemeinhin als "Unkraut" bezeichneten Pflanzen um teilweise bewußt, teilweise versehendlich in die heimische Flora eingebrachte Pflanzen, die hier keine natürlichen Feinde haben und sich teilweise enorm schnell ausbreiten. Während bestimmte Pflanzen einfach nur lästig sind, beinhalten andere gesundheitsgefährdende Stoffe, die, wenn sie in die Nahrungsmittelkette gelangen, auch den Menschen gefährden können. So wurde berichtet, daß Milch aus bestimmten Gegenden, in denen sich eines der genannten Unkräuter ausgebreitet hat, stark mit in dem Unkraut enthaltenden gesundheitsgefährdenden Stoffen belastet ist.

Besondere Probleme bereiten die schmalblättrige Wasserpest und die kanadische Wasserpest. Beide Arten stammen aus Nordamerika und haben sich erst kürzlich in Europa ausgebreitet. In Gewässern bilden sie zum Teil dominante Bestände, bedrohen die einheimische Flora und können die Bewirtschaftung und Nutzung der Wasserressourcen stark beinträchtigen. Gerade kleine, von Wassersportlern genutzte Binnenseen neigen zum Befall mit diesen Arten, der teilweise so stark sein kann, daß ein Ausüben des Wassersports nicht mehr möglich ist.

Zur Bekämpfung solchen Unkrauts sind drei grundsätzlich verschiedene Verfahren bekannt: das Spritzen von Unkrautvernichtungsmitteln, das Mähen und das Jäten. Aufgrund der Schadstoffbelastung scheidet das Spritzen in vielen Fällen, insbesondere bei der Bekämpfung von ungewünschten Wasserpflanzen aus.

Beim Mähen besteht das Problem, daß die Wurzeln der gemähten Pflanze im Boden verbleiben und in der Regel durch das Mähen nicht geschädigt werden, so daß die Pflanze nachwächst. Gerade bei bestimmten Wasserpflanzen kann das Mähen sogar eine Ausbreitung begünstigen, da abgeschnittene, nicht eingesammelte Pflanzenteile selbst Wurzeln schlagen können.

Die beste, weil ungiftigste und dauerhafteste Methode der Unkrautvernichtung ist das Jäten, bei dem die ungewünschte Pflanze mit der Wurzel aus dem Boden gerissen wird. Allerdings ist das Jäten insbesondere von Wasserpflanzen nicht trivial.

Aus der DE 92 10 966 U1 ist ein Gerät zum Jäten von Unkraut mit einem Stiel bekannt, an dessen unterem Ende Organe zum Erfassen von aus dem Erdreich heraus zu ziehendem Unkraut angebracht sind, wobei das Gerät eine ganze Reihe von gegenläufig rotierenden Walzenpaaren umfaßt, die am Außenumfang eines ebenfalls rotierenden Bodenantriebsrades angeordnet sind. Eine solche Vorrichtung ist nicht nur relativ kompliziert vom Aufbau, sie eignet sich auch nicht für Wasserpflanzen, da die gegenläufig rotierenden Walzenpaare Wasser vor sich her schöben und Wasserpflanzen nicht oder allenfalls nur schlecht greifen könnten.

Auch in der DE 94 05 900 U1 wird ein Gerät zum Jäten von Unkraut mit einem Stiel beschrieben, an dessen unterem Ende zwei gegenläufig rotierende Walzen zum Erfassen von aus dem Erdreich heraus zu ziehendem Unkraut angebracht sind. Ein solches Gerät ist jedoch für Wasserpflanzen unbrauchbar, da sich Wasser vor den Walzen staute und den Einzug der Pflanzen verhinderte.

Aus der DE 199 47 736 A1 ist ein Stab zum Ausreißen von Wasserpflanzen bekannt, bei dem eine auszureißende Wasserpflanze durch Drehen des Stabes um dessen Längsachse aufgewickelt werden soll ("Spaghettiprinzip"), um die Pflanzen dann zusammen mit dem Stab aus dem Wasser zu ziehen. Diese Vorrichtung eignet sich allenfalls zum Ausreißen einzelner Wasserpflanzen aus Gartenteichen, nicht aber zum Jäten großer Flächen.

Aus der US 4,999,982 ist ein Jätgerät für Wasserpflanzen bekannt, bei dem ein Gitter mit V-förmigen Ausnehmungen über den Boden gezogen wird, wobei sich die Pflanzen in dem Gitter verfangen und dann beim Fortbewegen des Gitters ausgerissen werden sollen. Diese Vorrichtung hat den Nachteil, daß sich die Pflanzen nach dem Ausreißen leicht aus dem Gitter lösen und dann wieder an anderer Stelle anwachsen können.

Aus der US 2004/0079003 A1 ist ein Mähboot bekannt, bei dem Wasserpflanzen geschnitten und dann mit einem Förderband abtransportiert werden. Da die Pflanzen dabei nicht ausgerissen werden, können sie nachwachsen, was gerade bei bestimmten Wasserpflanzen außerordentlich schnell erfolgen kann, so daß sich ein solches Mähboot nicht zur dauerhaften Bekämpfung von bestimmten Wasserpflanzen eignet.

Der GB 2 237 490 A offenbart den Oberbegriff des Anspruchs 1.

### OFFENBARUNG DER ERFINDUNG

Der Erfindung liegt die Aufgabe zugrunde, eine Jätvorrichtung anzugeben, mittels welcher Wasserpflanzen zuverlässig aus dem Grund eines Gewässers, also z.B. eines Sees, gerissen und dann weiter abtransportiert werden können. Der Erfindung liegt ferner die Aufgabe zugrunde, ein mit einer solchen Jätvorrichtung ausgestattetes Jätboot anzugeben.

Die Aufgabe wird gelöst von einer Jätvorrichtung mit den Merkmalen des Anspruches 1 bzw. einem Jätboot mit den Merkmalen des Anspruches 15. Die jeweiligen abhängigen Ansprüche betreffen vorteilhafte Ausgestaltungen und Weiterbildungen.

Das Ausstatten zumindest einer der Walzen der Jätvorrichtung mit einer Wendel mit abgeflachter Außenfläche schafft zwischen den Walzen Durchströmöffnungen, durch die gleich mehrere vorteilhafte Effekte erzielt werden. So besitzen bestimmte Pflanzen relativ große Blüten und Triebe, die verhindern können, daß die Pflanze von zwei einfach zylindrischen Walzen gegriffen und ausgerissen werden kann. Die durch die Wendel zwischen den Walzen geschaffenen Durchströmöffnungen wandern beim Betrieb der Walzen parallel zur Ebene der Drehachsen der Walzen. Damit wird die Wahrscheinlichkeit, daß zu jätendes Gut zwischen die Walzen gelangt und dann gegriffen und ausgerissen wird, deutlich erhöht.

Wichtig ist aber vor allem der Effekt, daß sich durch die Durchströmöffnungen Wasserströmungen in der Richtung ergeben, in die die Pflanzen ausgezogen werden sollen, was das Greifen der zu jätenden Pflanzen noch begünstigt und verhindert, daß sich vor den Walzen eine Stauwelle bildet, die die Pflanzen von den Walzen wegdrückt.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNG

- Fig. 1: zeigt den schematischen Aufbau einer Jätvorrichtung für Wasserpflanzen.
- Fig. 2: zeigt zwei mit jeweils zwei gegenläufigen Wellen versehene Walzen einer erfindungsgemäßen Jätvorrichtung

### BESCHREIBUNG BEVORZUGTER AUSFÜHRUNGSFORMEN

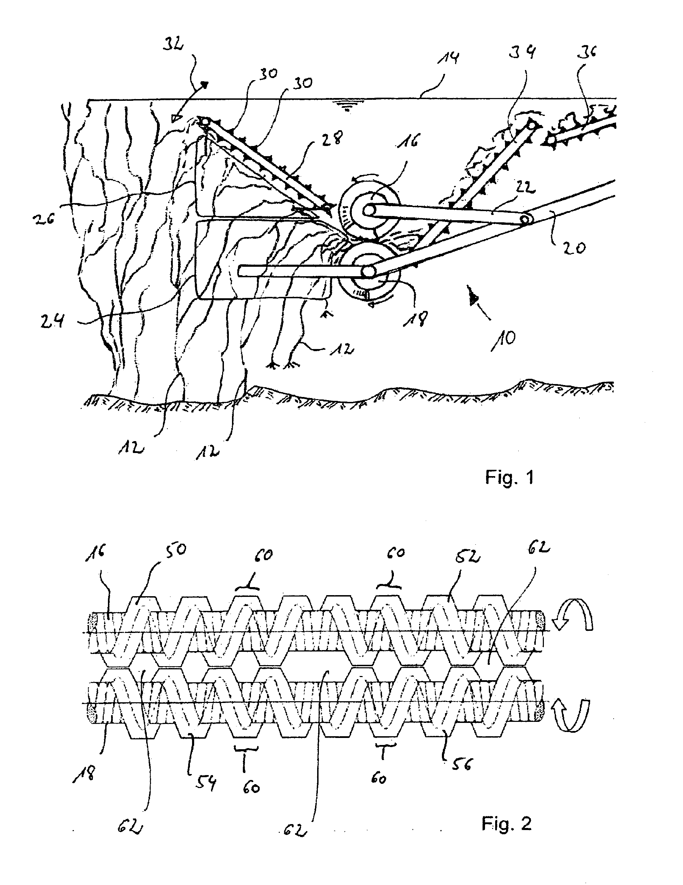

In der Fig. 1 ist eine in ihrer Gesamtheit mit 10 bezeichnete Jätvorrichtung für Wasserpflanzen 12 gezeigt, von denen aus Gründen der Übersichtlichkeit nur einige mit Bezugszeichen versehen wurden.

Die Jätvorrichtung 10 ist an einem hier nicht weiter dargestellten Boot oder einem Bootstender, der von einem Boot geschleppt wird, so angeordnet, daß sich die nachfolgend noch beschriebenen, das Ausreißen der Wasserpflanzen 12 bewirkenden Teile unterhalb der durch die Linie 14 angedeuteten Wasseroberfläche befinden.

Die Jätvorrichtung umfaßt bei diesem Ausführungsbeispiel zwei im Betrieb gegenläufig rotierende Walzen 16 und 18, die sich an einem im wesentlichen mittels der Arme 20 und 22 gebildeten Traggestell befinden und in an sich bekannter Weise mittels eines hier nicht weiter dargestellten motorischen Antriebs angetrieben werden. Dabei kann sowohl vorgesehen sein, daß sich in den Walzen 16 und/oder 18 selbst ein entsprechender, z.B. elektromotorischer Antrieb befindet, als auch, daß ein Motor auf dem Boot oder-Tender vorgesehen ist, dessen Antriebskräfte z.B. kardanisch oder mittels Treibriemen auf die Walzen geleitet werden, so daß sie sich gegenläufig drehen, wobei in beiden Fällen vorteilhaft eine Drehzahleinstellung vorgesehen werden kann, die es erlaubt, die Rotationsgeschwindigkeit, mit der die Walzen beim Betrieb rotieren, an den jeweiligen Anwendungsfall optimal anzupassen.

Die Jätvorrichtung umfaßt bei diesem Ausführungsbeispiel ferner hier zur besseren Sichtbarkeit des Wirkprinzips (Einzug der Wasserpflanzen) transparent dargestellte Leitbleche 24 und 26, die mit einer im Betrieb förderbandartig umlaufenden Zuführeinrichtung 28 zusammenwirken. Dabei kann die Zuführeinrichtung 28 aus einem umlaufenden Band oder Netz mit daran vorgesehenen vorspringenden Greifelementen 30 gebildet werden, von denen hier aus Gründen der Übersichtlichkeit nur einige mit Bezugszeichen versehen wurden.

Wie durch den Doppelpfeil 32 angedeutet, ist die Neigung der Zuführeinrichtung 28 relativ zu den Walzen 16 und 18 einstellbar. Dies ermöglicht es, die Jätvorrichtung vorteilhaft an den jeweiligen Anwendungsfall anzupassen.

Die hier transparent dargestellten Leitbleche 24 und 26 können, müssen aber nicht aus Blech sein, so daß der Terminus "Leitblech" hier nur aufgrund der üblichen Terminologie, nicht aber aufgrund des verwendeten Materials gewählt wurde. Insbesondere können die Leitbleche aus Kunststoff hergestellt sein. Außer den gezeigten Leitblechen 24 und 26 können weitere Leitbleche, insbesondere an den Stirnseiten der Walzen 16 und 18 und/oder den Armen 20 und 22 vorgesehen sein.

Die in Fig. 1 beispielhaft gezeigte Jätvorrichtung umfaßt ferner den Walzen nachgeordnete Transportmittel 34 und 36, die dazu dienen, ausgerissene Pflanzen an die Wasseroberfläche und in geeignete Auffangmittel zum Auffangen und Abtransportieren der gejäteten Pflanzen zu transportieren. Diese Transportmittel werden bei diesem Ausführungsbeispiel von zwei umlaufenden förderbandartigen Einrichtungen 34 und 36 gebildet, die nach Art der Zuführeinrichtung 28 ausgestaltet sind. Je nach Anwendungsfall können natürlich auch andere geeignete Transport- und Auffangmittel für das gejätete Gut zum Einsatz kommen, z.B. Absaugeinrichtungen. Letztere können gerade dann vorteilhaft sein, wenn Pflanzen gejätet werden, bei denen die Gefahr besteht, daß durch das Greifen der Pflanzen zwischen den Walzen Samen freigesetzt werden. Hier erlaubt es die Erfindung dem Fachmann vorteilhaft, optimal an den jeweiligen Einsatzfall angepaßte Mittel einzusetzen.

In der Fig. 2 sind stark schematisiert die beiden im Betrieb gegenläufig rotierenden Walzen 16 und 18 zum Einklemmen und Ausreißen des zu jätenden Gutes dargestellt. Dabei weist bei diesem Ausführungsbeispiel jede der beiden Walzen 16 und 18 jeweils zwei gegenläufig zueinander angeordnete Wendeln 50 und 52 bzw. 54 und 56 auf. Dabei ist unter dem Begriff "Wendel mit abgeflachter Außenseite" zu verstehen, daß, anders als z.B. bei Wendeln von Schneckenförderern, bei denen die Wendel selbst von verhältnismäßig dünnen Blechen gebildet wird, hier die Wendeln eine in der Draufsicht auf die Walzen gesehen verhältnismäßig breite, abgeflachte Außenfläche besitzen, wie durch die Bezugszeichen 60 angedeutet. Solche Wendeln können quasi nach Art eines breiten Bandes um die Walzen gelegt sein, können sich aber auch durch Einbringen entsprechender Nuten in die Mantelflächen der Walzen ergeben, was sowohl durch Bearbeiten der Walzen als auch entsprechende Formgebung beim Formen der Walzen erfolgen kann.

Die genannten Außenflächen bilden dann Greifflächen für das zu jätende Gut, wobei bei einer vorteilhaften Ausführungsform der Erfindung der Abstand der beiden Walzen 16 und 18 zueinander auf das jeweils zu jätende Gut eingestellt werden kann. Handelt es sich um besonders dünne Pflanzen, kann, wenn wie nachfolgend noch beschrieben werden wird, die Wendeln zumindest im Bereich ihrer Außenflächen aus elastischem Material bestehen, sogar vorgesehen sein, daß sich die Wendeln benachbarter Walzen berühren. Sind die zu jätenden Pflanzen dagegen relativ dick, kann ein Spalt zwischen den Wendeln benachbarter Walzen belassen sein.

Wie in Fig. 2 gut zu erkennen, ist bei diesem Ausführungsbeispiel zu jeder Wendel einer Walze auf der anderen Walze eine gegenläufige Wendel vorgesehen. Der Wendel 50 auf der Walze 16 ist also die Wendel 54 auf der Walze 18 und der Wendel 52 auf der Walze 16 die Wendel 56 auf der Walze 18 zugeordnet, wobei die Wendeln so angeordnet sind, daß sie im Betrieb quasi aufeinander abrollen. Ist der Abstand zwischen den Walzen 16 und 18 so eingestellt, daß sich die Wendeln benachbarter Walzen berühren, rollen sie tatsächlich aufeinander ab. Ist ein Abstand zwischen den Wendeln belassen, rollen sie quasi aufeinander ab, was bedeuten soll, daß die Durchströmöffnungen 62 zwischen den einander zugeordneten Wendeln zwar entlang der Drehachse der Walzen gesehen nach außen oder nach innen wandern, jedoch immer ein Abschnitt einer Wendel einem Abschnitt der ihr gegenüberliegenden Wendel unmittelbar gegenüberliegt.

Die Wendeln 50, 52, 54 und 56 sind bei diesem Ausführungsbeispiel aus elastischem Material, insbesondere Gummi oder einem gummiähnlichen Kunststoff hergestellt, was vorteilhaft bewirkt, daß eingeklemmte zu jätende Pflanzen zwar sicher gegriffen, nicht aber zerquetscht und zermahlen werden, was die Gefahr bedingte, die Ausbreitung der Pflanzen noch zu begünstigen. Alternativ oder zusätzlich können die Außenseiten der Wendeln rutschhemmend z.B. mit vorspringenden Elementen wie Noppen oder Stegen versehen sein.

Die dargestellte Jätvorrichtung arbeitet wie folgt: die förderbandartige Zuführeinrichtung 28 kämmt die zu jätenden Wasserpflanzen 12 in Richtung auf den Bereich zwischen den gegenläufig rotierenden Walzen 16 und 18. Durch die Wendeln sind zwischen den Walzen 16 und 18 wie in Fig. 2 gut zu erkennen Durchströmöffnungen 62 gebildet, von denen aus Gründen der Übersichtlichkeit nur einige mit Bezugszeichen versehen wurden und die vorteilhaft eine Doppelwirkung besitzen. Zum einen kann Wasser durch sie hindurchströmen, wobei die entstehende Strömung das Einziehen der zu jätenden Pflanzen noch begünstigt. Zum anderen erlauben Sie es, daß auch gegebenenfalls an den Pflanzen vorhandene Verdickungen, wie z.B. Knospen oder Früchte, leicht zwischen die Walzen gelangen und dann gegriffen und ausgerissen werden können.

Im Rahmen des Erfindungsgedankens sind zahlreiche Abwandlungen und Weiterbildungen möglich, die sich z.B. auf die Ausgestaltung der Walzen und Wendeln beziehen. So müssen die Walzen nicht wie gezeigt eine zylindrische Form besitzen, sondern können z.B. konisch ausgebildet sein. Auch ist es denkbar, die Vorrichtung an das Jäten von Landpflanzen anzupassen. Es kann es ausreichend sein, eine Walze mit zylindrischer Außenfläche und eine Walze mit einer Wendel vorzusehen. Ferner kann vorgesehen sein, daß sich die Abstände zwischen benachbarten Wendeln über die Länge der Walzen gesehen verändern.

## Patentansprüche

1. Jätvorrichtung (10) für Wasserpflanzen mit zwei im Betrieb gegenläufig rotierenden Walzen (16; 18) zum Einklemmen und Ausreißen zu jätenden Gutes (12),
**dadurch gekennzeichnet,**
**daß** wenigstens eine der Walzen (16; 18) mit wenigstens einer Wendel (50, 52; 54, 56) mit abgeflachter Außenseite (60) derart versehen ist, daß zwischen den Walzen (16; 18) Durchströmöffnungen (62) gebildet sind.

2. Jätvorrichtung (10) nach Anspruch 1, **dadurch gekennzeichnet, daß** wenigstens eine der Walzen (16; 18) mit zwei gegenläufigen Wendeln (50, 52; 54, 56) mit abgeflachten Außenseiten (60) versehen ist.

3. Jätvorrichtung (10) nach Anspruch 1 oder 2, **dadurch gekennzeichnet, daß** jede Walze (16; 18) mit jeweils wenigstens einer Wendel (50, 52; 54, 56) mit abgeflachter Außenseite (60) versehen ist.

4. Jätvorrichtung (10) nach Anspruch 3, **dadurch gekennzeichnet, daß** zu jeder Wendel (50, 52) einer Walze (16) eine gegenläufige Wendel (54, 56) auf der anderen Walze (18) vorgesehen und so angeordnet ist, daß die abgeflachten Außenseiten (60) der beiden Wendeln quasi aufeinander abrollen, wobei zwischen den quasi aufeinander abrollenden Wendeln (50, 54; 52, 56) ein Abstand belassen sein kann.

5. Jätvorrichtung (10) nach einem der Ansprüche 1 bis 4, **dadurch gekennzeichnet, daß** der Abstand zwischen den beiden Walzen (16; 18) einstellbar ist.

6. Jätvorrichtung (10) nach einem der Ansprüche 1 bis 5, **dadurch gekennzeichnet, daß** die wenigstens eine Wendel (50,54;52,56) zumindest im Bereich ihrer abgeflachten Außenseite (60) aus elastischem Material, insbesondere Gummi oder einem gummiähnlichen Kunststoff besteht.

7. Jätvorrichtung nach einem der Ansprüche 1 bis 6, **dadurch gekennzeichnet, daß** im Bereich der Stirnseiten der Walzen Leitbleche für das zu jätende Gut vorgesehen sind.

8. Jätvorrichtung (10) nach einem der Ansprüche 1 bis 7, **dadurch gekennzeichnet, daß** eine umlaufende Zuführeinrichtung (28) zum Zuführen von zu jätendem Gut (12) zu den Walzen (16; 18) vorgesehen ist.

9. Jätvorrichtung (10) nach Anspruch 8, **dadurch gekennzeichnet, daß** die Zuführeinrichtung (28) förderbandartig mit auf einem umlaufenden Band oder Netz vorspringenden Greifelementen (30) ausgebildet ist.

10. Jätvorrichtung (10) nach Anspruch 8 oder 9, **dadurch gekennzeichnet, daß** die Neigung der Zuführeinrichtung (28) relativ zu den Walzen (16; 18) einstellbar ist.

11. Jätvorrichtung (10) nach einem der Ansprüche 8 bis 10, **dadurch gekennzeichnet, daß** mit der Zuführeinrichtung (28) zusammenwirkende Leitbleche (24, 26) für das zu jätende Gut (12) vorgesehen sind.

12. Jätvorrichtung (10) nach einem der Ansprüche 1 bis 11, **dadurch gekennzeichnet, daß** den Walzen (16; 18) nachgeordnete Transport- und Auffangmittel (34, 36) zum Transportieren und Auffangen gejäteten Guts vorgesehen sind.

13. Jätvorrichtung (10) nach einem der Ansprüche 1 bis 12, **dadurch gekennzeichnet, daß** wenigstens eine der Walzen, vorzugsweise beide Walzen (16; 18) motorisch angetrieben sind.

14. Jätvorrichtung (10) nach einem der Ansprüche 1 bis 13, **dadurch gekennzeichnet, daß** sie an einer Schwimmeinrichtung vorgesehen und so ausgebildet ist, daß die Walzen (16; 18) in unterschiedliche Wassertiefen absenkbar sind.

15. Jätboot zum Jäten von Wasserpflanzen, **dadurch gekennzeichnet, daß** es eine Jätvorrichtung (10) nach einem der Ansprüche 1 bis 14 aufweist.

## Claims

1. Weeding device (10) for water plants, having two rollers (16; 18) which rotate in opposite directions during operation to clamp and tear out material (12) to be weeded,
**characterised in that**
at least one of the rollers (16; 18) is provided with at least one spiral (50, 52; 54, 56) with a flattened outer side (60) in such a manner that flow openings (62) are formed between the rollers (16; 18).

2. Weeding device (10) according to claim 1, **characterised in that** at least one of the rollers (16; 18) is provided with two spirals (50, 52; 54, 56) running in opposite directions with flattened outer sides (60).

3. Weeding device (10) according to claim 1 or 2, **characterised in that** each roller (16; 18) is provided with in each case at least one spiral (50, 52; 54, 56) with a flattened outer side (60).

4. Weeding device (10) according to claim 3, **characterised in that** for each spiral (50, 52) of a roller (16), a spiral (54, 56) running in the opposite direction is provided on the other roller (18) and is arranged in such a manner that the flattened outer sides (60) of the two spirals virtually roll on each other, wherein a distance can be left between the spirals (50, 54; 52, 56) which virtually roll on each other.

5. Weeding device (10) according to one of claims 1 to 4, **characterised in that** the distance between the two rollers (16; 18) can be set.

6. Weeding device (10) according to one of claims 1 to 5, **characterised in that** the at least one spiral (50, 54; 52, 56) consists of an elastic material, in particular rubber or a rubber-like plastic, at least in the region of the flattened outer side (60) thereof.

7. Weeding device according to one of claims 1 to 6, **characterised in that** guide plates for the material to be weeded are provided in the region of the end faces of the rollers.

8. Weeding device (10) according to one of claims 1 to 7, **characterised in that** a circulating feeding means (28) is provided for feeding material (12) to be weeded to the rollers (16; 18).

9. Weeding device (10) according to claim 8, **characterised in that** the feeding means (28) is configured like a conveyor belt with gripping elements (30) projecting from a circulating belt or network.

10. Weeding device (10) according to claim 8 or 9, **characterised in that** the inclination of the feeding means (28) relative to the rollers (16; 18) can be set.

11. Weeding device (10) according to one of claims 8 to 10, **characterised in that** guide plates (24, 26) interacting with the feeding means (28) are provided for the material (12) to be weeded.

12. Weeding device (10) according to one of claims 1 to 11, **characterised in that** transporting and collecting means (34, 36) arranged downstream of the rollers (16; 18) are provided for transporting and collecting weeded material.

13. Weeding device (10) according to one of claims 1 to 12, **characterised in that** at least one of the rollers, preferably both rollers (16; 18) are motor-driven.

14. Weeding device (10) according to one of claims 1 to 13, **characterised in that** it is provided on a floating means and is configured in such a manner that the rollers (16; 18) can be sunk to different water depths.

15. Weeding boat for weeding water plants, **characterised in that** it has a weeding device (10) according to one of claims 1 to 14.

## Revendications

1. Dispositif de sarclage (10) pour plantes aquatiques, comprenant deux cylindres (16; 18) tournant en sens opposés en fonctionnement et destinés à serrer et à arracher les végétaux à sarcler (12),
**caractérisé par le fait que** l'un au moins des cylindres (16 ; 18) est pourvu d'au moins une hélice (50, 52 ; 54, 56) à surface extérieure aplatie (60) de manière à ce que des orifices d'écoulement (62) soient réalisés entre lesdits cylindres (16 ; 18).

2. Dispositif de sarclage (10) selon la revendication 1, **caractérisé par le fait que** l'un au moins des cylindres (16 ; 18) est pourvu de deux hélices opposées (50, 52 ; 54, 56) à surfaces extérieures aplaties (60).

3. Dispositif de sarclage (10) selon la revendication 1 ou 2, **caractérisé par le fait que** chacun des cylindres (16 ; 18) est pourvu respectivement d'au moins une hélice (50, 52 ; 54, 56) à surface extérieure aplatie (60).

4. Dispositif de sarclage (10) selon la revendication 3, **caractérisé par le fait que** pour chaque hélice (50, 52) d'un cylindre (16) est prévue une hélice opposée (54, 56) sur l'autre cylindre (18) qui est disposée de manière à ce que les surfaces extérieures aplaties (60) des deux hélices roulent quasiment les unes sur les autres, un intervalle pouvant être laissé entre les hélices (50, 54 ; 52, 56) roulant quasiment les unes sur les autres.

5. Dispositif de sarclage (10) selon l'une quelconque des revendications 1 à 4, **caractérisé par le fait que** ledit intervalle entre les deux cylindres (16 ; 18) est réglable.

6. Dispositif de sarclage (10) selon l'une quelconque des revendications 1 à 5, **caractérisé par le fait que** ladite au moins une hélice (50, 54 ; 52, 56) est réalisée, au moins au niveau de sa surface extérieure aplatie (60), dans une matière élastique, en particulier en caoutchouc ou dans une matière plastique similaire au caoutchouc.

7. Dispositif de sarclage selon l'une quelconque des revendications 1 à 6, **caractérisé par le fait que** des tôles de guidage pour les végétaux à sarcler sont prévues au niveau des faces frontales desdits cylindres.

8. Dispositif de sarclage (10) selon l'une quelconque des revendications 1 à 7, **caractérisé par le fait qu'**un dispositif d'alimentation tournant (28) destiné à amener des végétaux à sarcler (12) aux cylindres (16 ; 18) est prévu.

9. Dispositif de sarclage (10) selon la revendication 8, **caractérisé par le fait que** ledit dispositif d'alimentation (28) est réalisé à la manière d'une bande transporteuse avec des éléments de préhension (30) faisant saillie sur une bande ou un filet tournant(e).

10. Dispositif de sarclage (10) selon la revendication 8 ou 9, **caractérisé par le fait que** l'inclinaison du dispositif d'alimentation (28) par rapport aux cylindres (16 ; 18) est réglable.

11. Dispositif de sarclage (10) selon l'une quelconque des revendications 8 à 10, **caractérisé par le fait que** des tôles de guidage (24, 26) pour les végétaux à sarcler (12), qui agissent de concert avec ledit dispositif d'alimentation (28) sont prévues.

12. Dispositif de sarclage (10) selon l'une quelconque des revendications 1 à 11, **caractérisé par le fait que** des moyens de transport et de réception (34, 36) placés en aval des cylindres (16 ; 18) et destinés à transporter et à recevoir les végétaux sarclés sont prévus.

13. Dispositif de sarclage (10) selon l'une quelconque des revendications 1 à 12, **caractérisé par le fait que** l'un au moins des cylindres, de préférence les deux cylindres (16 ; 18) sont entraînés par moteur.

14. Dispositif de sarclage (10) selon l'une quelconque des revendications 1 à 13, **caractérisé par le fait qu'**il est prévu sur un dispositif flottant et est réalisé de telle sorte que les cylindres (16 ; 18) sont aptes à être plongés dans des profondeurs d'eau différentes.

15. Bateau de sarclage pour sarcler des plantes aquatiques, **caractérisé par le fait qu'**il comprend un dispositif de sarclage (10) selon l'une quelconque des revendications 1 à 14.
